# FASCICULE DE BREVET EUROPEEN

(11) **EP 1 256 096 B1**
(45) Date de publication et mention de la délivrance du brevet: **29.12.2004**
(21) Numéro de dépôt: 01904009.6
(22) Date de dépôt: 31.01.2001
(51) Int. Cl.: G06K 19/077

(54) **JETON A PUCE ELECTRONIQUE ET PROCEDES DE FABRICATION D'UN TEL JETON**
ELEKTRONISCHE WERTMARKE UND VERFAHREN ZU IHRER HERSTELLUNG
SILICON CHIP TOKEN AND METHODS FOR MAKING SAME

(30) Priorité: 15.02.2000 FR 0001812
(43) Date de publication de la demande: 13.11.2002
(73) Titulaire: Gaming Partners International, 21420 Savigny-les-Beaune (FR)
(72) Inventeur: CHARLIER, Gérard, F-75006 Paris (FR); PHILIPPE, Eric, F-13450 Grans (FR)
(74) Mandataire: Poidatz, Emmanuel
(86) Numéro de dépôt international: PCT/FR2001/000292
(87) Numéro de publication internationale: WO 2001/061645

(56) Documents cités:
- EP-A- 0 587 011
- EP-A- 0 694 872
- DE-A- 19 710 656
- US-A- 5 690 773

## Description

### DOMAINE TECHNIQUE

La présente invention concerne d'une façon générale des jetons tels que disques ou plaques planes intégrant une puce électronique ou un identifiant électronique (indifféremment appelé ci-après dispositif d'identification électronique). L'invention trouve ses applications, entre autres, dans l'identification "sans contact" des personnes et des objets aussi appelée l'étiquetage électronique et dans l'authentification, l'identification et la gestion (notamment le suivi et le comptage) des jetons de jeu également appelés jetons de casino. Par jeton de jeu on entend tout jeton utilisable en salle de jeux et représentant une valeur nominale prédéterminée ou non. Les jetons de jeu sont en général fabriqués en matière plastique rigide pour obtenir une structure suffisamment solide pour résister aux conditions d'utilisation dans les casinos souvent assez rudes.

### TECHNIQUE ANTERIEURE

La demande de brevet EP-A-0694872 au nom du Demandeur décrit un jeton ou une plaque de jeu dont le corps intégrant une puce électronique est réalisé à partir de feuilles de matière plastique laminées. La puce électronique ou identifiant électronique comporte un circuit électronique à mémoire portant des informations d'identification et/ou de codage concernant la personne ou l'objet associé au jeton (étiquette électronique) ou le jeton lui-même (jeton de jeu ou jeton de paiement), le circuit électronique étant en général associé à un émetteur-récepteur relié à une antenne et adapté pour être alimenté par couplage inductif. La puce est disposée au centre d'une ouverture prévue dans le corps de la plaque, protégée et maintenue de part et d'autre par deux pastilles rigides et finalement solidarisée et intégrée au corps de la plaque par un laminage de feuilles de couverture en acétate de cellulose transparent suivi d'un thermoformage de l'ensemble.

Le procédé de fabrication du corps de la plaque à puce électronique par laminage de feuilles minces en matière plastique décrit dans la demande de brevet précitée est bien adapté aux plaques richement décorées et représentant une valeur nominale élevée le plus souvent fabriquées en petites ou moyennes séries. Toutefois une bonne protection de la puce lors de son intégration dans le corps de la plaque nécessite une certaine épaisseur (normalement comprise entre 4 et 6 mm) de telle sorte que des jetons ou plaques de jeu d'une épaisseur de l'ordre de 3 mm à puce électronique sont difficiles à fabriquer par cette méthode, entraînant une quantité de rebut par destruction de la puce trop importante.

Parmi les méthodes de fabrication peu coûteuses de plaques et de jetons de jeu, on connaît du brevet US 3.968.582 la méthode de thermocompression d'un composé en matière plastique dans un moule donnant la forme finale du jeton. A titre de variante, des inserts périphériques de couleurs variées sont obtenus par élimination partielle de matière en périphérie de la préforme du jeton et remplacement par des inserts en matière colorée avant l'opération de thermocompression. Toutefois les jetons ainsi obtenus présentent une décoration de qualité visuelle médiocre et ne comportent aucun identifiant électronique.

### EXPOSE DE L'INVENTION

L'invention a pour but de proposer un nouveau procédé de fabrication de jetons à identifiant électronique de structure simple, compacte et robuste, notamment de jetons de faible épaisseur, permettant une fabrication facilitée et peu onéreuse, bien adaptée aux grandes séries.

A cette fin, l'invention propose un jeton à dispositif d'identification électronique, notamment un jeton ou une plaque de jeu, comportant un corps plat en matière plastique à faces sensiblement parallèles et pourvu d'une cavité recevant un dispositif d'identification électronique, ladite cavité présentant au moins une ouverture faciale fermée par un bouchon ou couvercle en matière plastique inséré dans ladite cavité dans un état solide déformable et solidarisé directement audit corps plat par chauffage et pression combinés, caractérisé en ce que le corps et le bouchon ou couvercle sont réalisés en matières plastiques thermodurcissables, et en ce que ledit corps est réalisé à partir d'une préforme.

La structure du jeton ou de la plaque de jeu selon l'invention et dans laquelle le bouchon (ou le couvercle) en matière plastique est inséré à l'état solide dans la cavité et solidarisé directement au corps en matière du jeton donne une grande robustesse au jeton tout en réduisant l'épaisseur de celui-ci (par élimination de toute couche de matière en couverture superflue). De plus la simplification de la structure les jetons selon l'invention obtenue grâce à l'utilisation de matières plastiques thermodurcissables pour le corps et les bouchons rend ces jetons beaucoup plus faciles à fabriquer. En particulier, la consistance propre des bouchons (ou des couvercles) du fait de leur état solide facilite beaucoup leur manipulation pendant la fabrication des jetons et s'avère très avantageuse par rapport à d'autres techniques utilisables pour combler les cavités après la mise en place de la puce électronique et faisant usage de résines liquides polymérisables.

On notera que les termes bouchons et couvercles sont utilisés quasiment indistinctement dans le présent exposé, étant seulement fait remarquer que le terme bouchon paraît le plus approprié pour désigner un élément de fermeture d'une certaine épaisseur et le terme couvercle paraît le plus approprié pour désigner une élément de fermeture de faible épaisseur.

Avantageusement on utilise dans des variantes de réalisation de l'invention des bouchons (ou des couvercles) insérés avec un jeu latéral minimum dans les ouvertures faciales des cavités de formes complémentaires et directement solidarisés au corps du jeton ou de la plaque par soudure (par chauffage et pression combinés) et emboîtage mécanique.

Selon un mode de réalisation avantageux de l'invention le bouchon (ou le couvercle), inséré dans la cavité dans un état solide, éventuellement ramolli ou pâteux mais gardant une certaine consistance, est déformé et soudé au corps de jeton par chauffage et pression combinés. Comme il apparaîtra dans la suite de l'exposé le chauffage du corps et/ou du jeton peut intervenir préalablement à l'application de la pression et/ou simultanément à l'application de la pression en fonction des matériaux plastiques utilisés, des formes des éléments à souder et des dispositifs de chauffage et de presse utilisés.

Ainsi la capacité de déformation du bouchon (ou du couvercle) réduit les risques de détérioration de l'identifiant électronique tout en assurant une soudure très robuste, le plus souvent avec emboîtage, au niveau de la paroi latérale de la cavité et une bonne cohésion entre le corps de jeton ainsi complété et l'identifiant électronique. Avantageusement l'application des chauffage et pression combinés s'étend sur le bouchon (ou couvercle) et les deux faces entières dudit corps, ce qui permet en général d'obtenir d'emblée un bon état de surface sur les deux faces du jeton ou de la plaque.

Selon une première variante le corps présente une cavité traversante fermée par deux bouchons (ou couvercles) disposés de part et d'autre du dispositif d'identification électronique. Cette disposition permet de mieux répartir les efforts sur le dispositif d'identification électronique lors de l'opération de soudage par chauffage et pression combinés.

Selon une autre variante le corps présente une cavité non-traversante à fond plat ou à fond à gradin destiné à recevoir tout ou partie du dispositif d'identification électronique et fermée par un bouchon (ou un couvercle).

Avantageusement, le dispositif d'identification électronique comporte un circuit électronique comportant une mémoire portant des informations concernant le jeton, par exemple un code d'identification, et un émetteur-récepteur à antenne périphérique adapté pour être alimenté par couplage inductif, le tout étant disposé dans une enceinte de protection telle qu'une enveloppe plane en film mince, une coque de protection en matière plastique rigide ou une pastille de résine d'enrobage durcie, notamment de type époxy. Avantageusement dispositif d'identification électronique et l'enceinte de protection se présentent sous la forme d'un disque plat de diamètre inférieur au diamètre de la cavité pour pouvoir se loger au moins en partie dans le logement formé par le fond à gradin de la cavité.

Selon encore un autre mode de réalisation de l'invention le bouchon (ou le couvercle) est réalisé en matière plastique thermodurcissable, chargée ou non, notamment une matière appartenant à la famille des polyesters insaturés.

Avantageusement, mais de façon optionnelle, le corps et le bouchon (ou le couvercle) sont réalisés à partir de matières plastiques présentant le même polymère de base, afin notamment de faciliter la soudure entre le corps et le bouchon (ou le couvercle), ou en matières plastiques compatibles pour la soudure.

L'invention concerne également un procédé de fabrication d'un jeton à dispositif d'identification électronique à corps en matière plastique thermodurcissable comportant les opérations suivantes:
- réalisation d'une préforme du corps de jeton en matière plastique thermodurcissable,
- réalisation d'une cavité dans ladite préforme présentant au moins une ouverture faciale,
- mise en place du dispositif d'identification électronique dans ladite cavité et insertion d'un bouchon ou d'un couvercle dans chaque ouverture faciale,
- mise en place dans un moule de l'ensemble constitué de la préforme du corps de jeton pourvue du dispositif d'identification électronique et du ou des bouchons (ou couvercles),
- réalisation du corps du jeton par thermocompression dudit ensemble et fermeture de la cavité dans le corps du jeton.

Avantageusement la préforme du corps de jeton est obtenue par prémoulage à froid.

Il est à noter que l'invention n'est pas limitée aux jetons et plaques de jeu mais concerne également d'autres jetons à dispositif d'identification électronique à puce électronique de forme et de structure voisines, notamment des jetons de paiement électronique, des étiquettes électroniques, des plaques d'identification électronique, étant fait également remarquer que l'identification électronique peut parfois se limiter à une simple authentification de la puce, c'est à dire à la reconnaissance de la présence de la puce par le lecteur « sans contact » associé (lecteur à radiofréquence également appelé lecteur RFID) à fin de transaction électronique (lecture et/ou écriture).

D'autres buts, caractéristiques et avantages de la présente invention apparaîtront à la lecture de la description qui va suivre de divers modes de réalisation de l'invention donnés à titre d'exemples non limitatifs, en référence aux dessins ci-joints.

### DESCRIPTION SOMMAIRE DES DESSINS

- la figure 1 représente une vue en perspective d'une plaque de jeu en matériau thermoplastique à cavité traversante selon un mode de réalisation non compris dans la présente invention;
- la figure 2 représente une vue en coupe longitudinale, selon un plan perpendiculaire à la plaque et passant par la ligne AA, du corps de plaque de la figure 1 pourvu de l'identifiant électronique avant solidarisation des bouchons (ou des couvercles);
- la figure 3 représente une vue en coupe longitudinale, selon un plan perpendiculaire à la plaque et passant par la ligne AA, de la plaque de la figure 1 après solidarisation des bouchons (ou des couvercles);
- la figure 4 représente une vue en coupe longitudinale similaire à la figure 2 et concernant une variante de la plaque de la figure 1 à cavité non-traversante avant solidarisation du bouchon (ou du couvercle);
- la figure 5 représente une vue en coupe longitudinale similaire à la figure 3 concernant la variante de la plaque de la figure 1 à cavité non-traversante illustrée à la figure 4 après solidarisation du bouchon (ou du couvercle) ;
- la figure 6 représente une vue en perspective d'un jeton de jeu en matériau thermodurcissable à cavité non-traversante selon un mode de réalisation préférentiel de la présente invention;
- la figure 7 représente une vue en coupe diamétrale, selon un plan perpendiculaire au jeton et passant par la ligne BB, de la préforme du corps de jeton de la figure 6 pourvu de l'identifiant électronique et du bouchon ou du couvercle avant l'opération de thermocompression;
- la figure 8 représente une vue en coupe diamétrale, selon un plan perpendiculaire au jeton et passant par la ligne BB du jeton de la figure 6, après l'opération de thermocompression; et
- la figure 9 représente une vue en coupe diamétrale du dispositif d'identification électronique intégré dans les plaques et jetons selon l'invention.

Il est à noter que les plaques et jetons illustrés dans les dessins présentés ci-dessus sont représentés selon une échelle agrandie en épaisseur pour faciliter la compréhension des dessins.

### MEILLEURS MODES DE REALISATION DE L'INVENTION

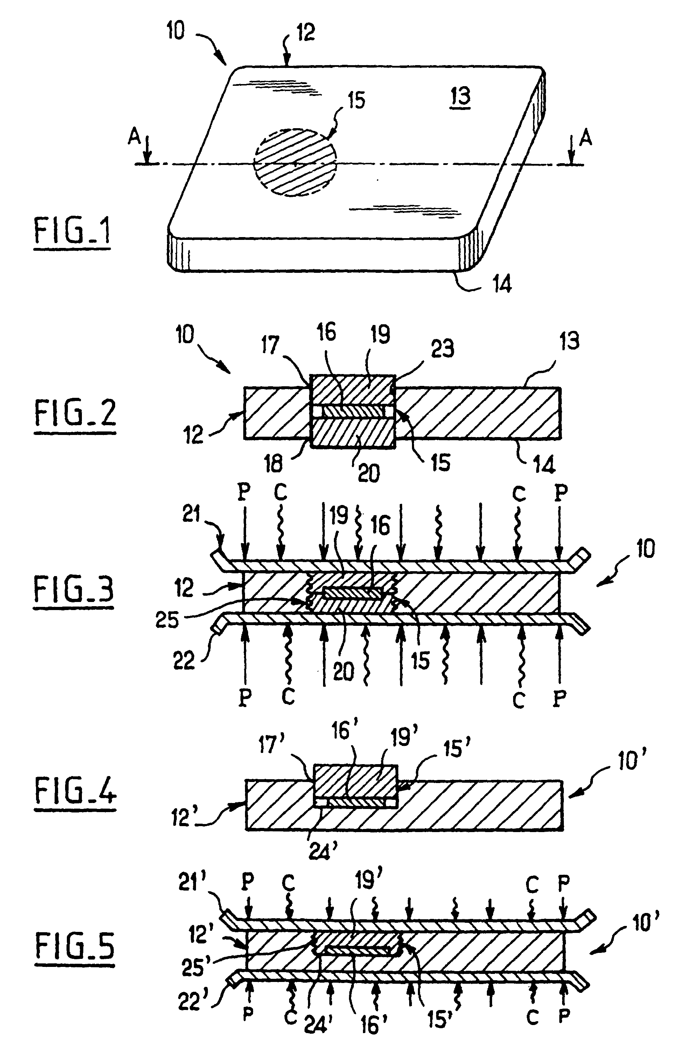

Les figures 1 à 3 concernent un mode de réalisation de jeton ou plaque à bouchon (ou couvercle) solide déformable et selon lequel le corps du jeton ou de la plaque est constitué en matériau thermoplastique, dans le cas présent à une plaque de jeu 10 sensiblement rectangulaire représentée en perspective dont le corps plat 12 présente deux faces sensiblement parallèles 13 et 14. La plaque intègre une puce ou identifiant électronique 16 disposé dans une cavité 15 traversant le corps 12 perpendiculairement aux faces 13 et 14 visible sur la figure 2 (et située sur la figure 1 par une ligne à tirets). Bien évidemment la description de ce mode de réalisation [de l'invention] s'applique également aux jetons en forme de disque à contour circulaire et aux jetons ou plaques plats à contours divers, notamment elliptiques.

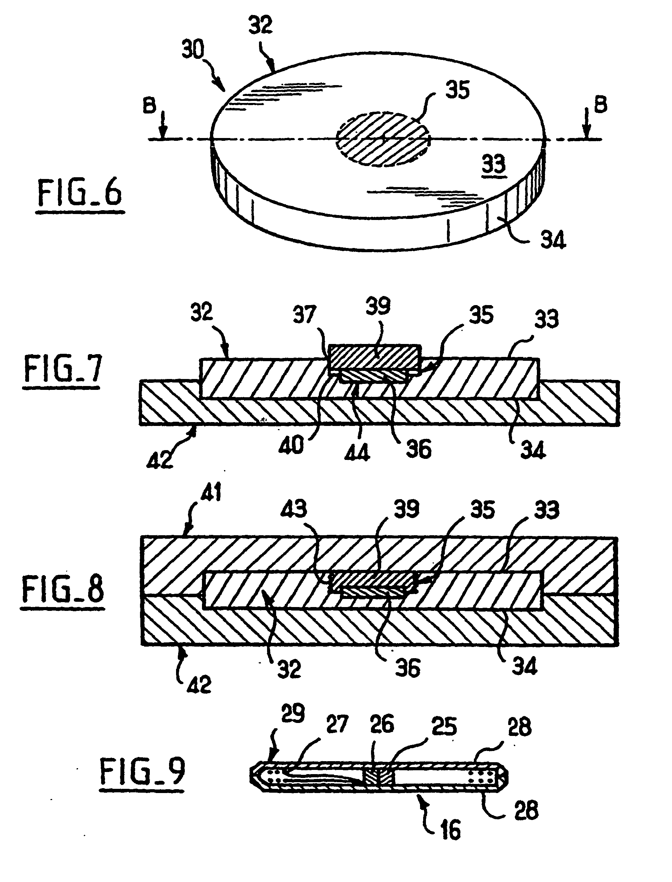

D'une façon générale, le dispositif d'identification électronique 16 (montré en coupe sur la figure 9) comporte un circuit électronique 25 incorporant une mémoire PROM portant des informations concernant le jeton et/ou la personne ou l'objet associée au jeton, par exemple un code d'identification fixe numérique ou alphanumérique de 64 bits (comportant un ou plusieurs champs tels que: le numéro de série, l'identification d'un produit, d'un lot ou d'un lieu, une valeur numérique associée au jeton, etc.), et un émetteur-récepteur 26 à antenne circulaire périphérique 27 adapté pour être alimenté par couplage inductif à partie des ondes modulées du poste de lecture (non représenté). Dans la pratique, l'émetteur-récepteur est susceptible d'échanger sans contact par ondes modulées des données avec un poste de lecture placé à distance (à titre d'exemple non limitatif entre 15 cm et 2 m), la fréquence de travail se situant entre 10 kHz et 20 MHz. Le dispositif électronique à mémoire permet par exemple de lutter contre les vols et/ou de faciliter la gestion et l'inventaire d'un lot d'objets dans une espace défini (aires de stockage, entrepôts, magasins). Bien entendu sans sortir du cadre de l'invention, le dispositif électronique à mémoire 16 de type non reprogrammable (lecture seule) peut être remplacé par un dispositif reprogrammable à code évolutif avec possibilité de lecture et écriture en mémoire.

Le dispositif d'identification électronique 16 y compris l'émetteur-récepteur et l'antenne périphérique est placé entre deux films plastiques 28 minces et résistants soudés en périphérie pour former une enveloppe de protection, l'ensemble se présentant sous la forme d'une pastille mince 29 d'une épaisseur maximale de l'ordre d'un millimètre et de diamètre compris entre 10 et 20 mm. Il est résulte que la cavité 15 se présente sous une forme cylindrique à base circulaire d'un diamètre légèrement supérieur de quelques millimètres (voir figure 2) évitant ainsi une détérioration prématurée de la puce électronique lors de l'introduction de l'identifiant électronique dans la cavité. De plus sans sortir du cadre de l'invention des cavités à sections diverses (notamment rectangulaires) sont utilisées pour accueillir des identifiants électroniques dont les antennes présentent des contours correspondants (notamment rectangulaires).

Il est à noter que l'invention n'est pas limitée à ce type de protection à film mince pour identifiant électronique mais concerne également l'intégration de tout identifiant électronique dans son enceinte de protection, notamment des identifiants encapsulés dans une coque en matière plastique rigide, par exemple une coque en matière plastique injectée pour étiquette électronique telle que décrite dans la demande WO-A-98/39989 au nom du Demandeur, ou noyés dans une pastille de résine durcie notamment de type époxy. Dans la pratique, le choix de l'enceinte de protection dépend du niveau de protection requis pour la puce électronique elle-même et nécessaire pour permettre à la puce de résister à la montée en température et pression lors de la fermeture de la cavité et de la soudure du bouchon ou du couvercle.

Le corps 12 de la plaque peut être indifféremment réalisé soit à l'unité par exemple par moulage par injection, la cavité, traversante ou non, étant obtenue directement au moulage, soit en groupe à partir de feuilles ou bandes épaisses (monobloc ou à couches multiples soudées, collées ou laminées) de matière thermoplastique prédimensionnées soit à l'épaisseur finale de la plaque ou du jeton, par exemple 3mm (en cas de compression limitée en surface) soit à une épaisseur légèrement supérieure par exemple 4 mm pour 3 mm (en cas de compression s'étendant sur toute la face de la plaque et du jeton telle qu'illustrée sur les figures 3 et 5), les autres dimensions pouvant atteindre le mètre.

Selon une première variante à cavité traversante (non comprise dans l'invention) illustrée à la figure 2 la feuille ou bande épaisse de matière plastique est percée du nombre de trous correspondant au nombre de plaques ou jetons à fabriquer, le dégroupage des plaques ou des jetons obtenu par découpe au poinçon ou à la fraise du contour du jeton ou de la plaque, découpe également appelée détourage, étant réalisé en fin de fabrication après intégration de l'identifiant électronique 16 et fermeture de la cavité.

Selon une autre variante (non comprise dans l'invention), la feuille ou bande épaisse en matière plastique est ramollie par chauffage (entre 50°C et 150°C) et poinçonnée pour obtenir à l'unité le corps 12, 12' de jeton ou de la plaque. En parallèle ou simultanément ou procède à la réalisation de la cavité destinée à servir de logement pour l'identifiant électronique :
- soit en trou traversant 15 par poinçonnage ou découpe ;
- soit en trou borgne, cavité non traversante 15' à fond plat 24' ou à fond à gradin, soit par matriçage sur une pièce encore chaude, soit par lamage non débouchant à la fraise à deux tailles sur une pièce refroidie plus dure. A titre d'exemple la cavité présente une profondeur d'environ 2 mm.

Les bouchons ou couvercles 19,20,19' sont obtenus par exemple par poinçonnage (à froid ou à chaud si nécessaire) à partir de plaques ou bandes de matière plastique d'épaisseur comprise entre 1 et 1,5 mm.

Comme illustré sur la figure 2, la cavité traversante 15 comporte deux ouvertures faciales 17 et 18. L'intégration de l'identifiant électronique 16 commence par la mise en place de celui-ci entre les deux bouchons ou couvercles 19 et 20.

Les bouchons ou couvercles 19 et 20 sont insérés (avec l'identifiant 16') dans la cavité 15 de préférence avec un jeu minimal dans un état solide, parfois ramolli ou pâteux tout en gardant une certaine consistance, et déformable pendant la phase ultérieure de compression et de soudure. Les bouchons ou couvercles 19 et 20 de contour correspondant à celui de la cavité 15, en l'espèce un contour circulaire, présentent une épaisseur faisant déborder légèrement leur faces externes au delà des faces 13 et 14 du corps 12 de façon à assurer le remplissage complet de la cavité 15 et une solide soudure avec un emboîtage mécanique plus ou moins ondulé 25 (voir figure 3) dans la paroi latérale 23 de la cavité lors de la fermeture des ouvertures faciales 17 et 18.

A titre d'exemple non limitatif, le corps 12 et les bouchons ou couvercles 19 et 20 sont réalisés dans la même matière thermoplastique, en l'espèce chargée entre 50% et 70% de baryte ou de sulfate de baryum, choisie parmi l'une des familles de polymères suivantes :
- les styrèniques et leurs copolymères notamment le polybutadiène-styrène (PBS) et l'acrylonitrile-butadiènestyrène (ABS),
- les méthacryliques notamment le polyméthacrylate de méthyle (PMMA),
- les vinyliques, notamment le polychlorure de vinyle (PVC), et leurs copolymères,
- les cellulosiques notamment l'acétate de cellulose,
- les polyesters saturés notamment le polybutylène térephtalate (PBT),
- et les polyoléfines, notamment le polyéthylène haute densité (PE hd), et leurs copolymères.

Il est à noter que de bons joints de soudure peuvent également être obtenus en utilisant pour le corps et les bouchons (ou les couvercles) des couples de matières thermoplastiques différentes à base de polymères présentant une bonne compatibilité pour être soudés entre eux par exemple les couples ABS/PMMA, ABS/PBT et PVC/PBT. En tout état de cause l'emboîtage ondulé au niveau du joint renforce la soudure.

L'intégration de l'identifiant électronique se termine par chauffage et compression (illustrées respectivement à la figure 3 par les flèches droites P et les flèches ondulées C) des bouchons 19 et 20 et du corps 12 à l'aide d'une presse dont les plateaux chauffants 21 et 22 sont disposés en regard de chaque bouchon (ou couvercle) 19 et 20 de part et d'autre du corps de plaque 12. Ces plateaux chauffants 21 et 22 qui s'étendent sur toute la surface des faces 13 et 14 du corps de la plaque ou du jeton, sont mobiles en rapprochement l'une par rapport à l'autre par tout agencement connu (non décrit) de façon à pousser, suffisamment mais sans excès, les bouchons ou couvercles 19 et 20 vers l'intérieur de la cavité 15 pour venir enrober l'enveloppe de protection 29 de l'identifiant 16 et maintenir en place ce dernier. Le mouvement contrôlé de la presse à plateaux 21 et 22 permet d'obtenir directement le corps de plaque ou de jeton à l'épaisseur finale désirée (par exemple 3 mm) l'excédent de matière étant chassé sur la tranche du jeton, le corps subissant de plus de façon optionnelle une réduction modérée d'épaisseur (par exemple de l'ordre du millimètre).

Selon les situations particulières, et selon notamment les types de matériaux thermoplastiques utilisés pour le corps et les bouchons ou couvercles, la température de chauffage est généralement comprise entre 100°C et 160°C et la pression appliquée généralement comprise entre 1 et 10 MPa (de 10 à 100 bars). De plus, il peut être avantageux de commencer le chauffage du corps et/ou du bouchon (ou couvercle) avant l'application de pression sur les bouchons (ou couvercles) et/ou sur le corps.

Comme illustré à la figure 3 les bouchons ou couvercles 19 et 20 sous l'action combinée de la chaleur et de la pression appliquée sur chaque face 13 et 14 se déforment pour se souder à la paroi latérale 23 de la cavité 15 et former le plus souvent avec celle-ci des ondulations 25 d'emboîtage lors de la fermeture des ouvertures faciales 17 et 18, la limite de la zone de soudure disparaissant (au moins en surface) en cas de matériaux thermoplastiques identiques ou quasi identiques et de même couleur pour les bouchons (ou couvercles) 19 et 20 et le corps de plaque 12. Ainsi la création d'un véritable emboîtage mécanique entre le bouchon et la paroi de la cavité renforce le joint de soudure. Cet emboîtage est obtenu plus facilement lorsque chaleur et pression sont appliquées sur la totalité de la face du jeton (le fluage de matière s'en trouvant facilité) plutôt que dans une zone limitée au bouchon (ou au couvercle) et aux abords immédiats des ouvertures faciales pour le corps.

Dans certains cas on s'arrange pour que le volume des deux bouchons (ou couvercles) 19 et 20 soit légèrement supérieur au volume nécessaire pour bien remplir la cavité 15 une fois placé l'identifiant 16, l'excès de matière sur les faces 13 et 14 après la fermeture de la cavité 15 étant chassé par fluage vers la tranche du corps du jeton ou de la plaque.

La fabrication de la plaque (ou du jeton) se poursuit par la découpe du contour du corps en cas de fabrication en groupe à partir d'une feuille épaisse et/ou la finition de la tranche si nécessaire. De façon optionnelle il est possible de procéder à la formation d'un décor en creux ou d'une nouvelle cavité de faible profondeur (1 à 2 mm) par matriçage et/ou à la pose d'un décor de surface sur les faces de la plaque (ou du jeton) par exemple par tampographie, par poinçonnage à chaud ou par des étiquettes de couverture sérigraphiées et thermocollées sur les faces de la plaque (ou du jeton), etc...

Les figures 4 et 5 concernent une plaque 10' variante de la plaque 10 (ou du jeton) décrite ci-avant et se distinguant de cette dernière par une cavité 15' non-traversante. De structures générales voisines, les plaques 10 et 10' présentent un grand nombre de caractéristiques techniques identiques ou similaires dont la description ne sera pas reprise en détails ci-après et qui portent les mêmes références numériques assorties du signe « ' ».

Comme illustrée sur la figure 4, la cavité 15' de la plaque 10' présente un fond plat 24' sensiblement parallèle aux faces 13' et 14' et distant de l'unique ouverture faciale 17' de façon à placer l'identifiant électronique 16' en position médiane dans l'épaisseur du corps 12' avec son antenne périphérique circulaire en position parallèle aux faces 13' et 14' de la plaque 10'. Comme pour la plaque 10, un bouchon (ou couvercle) 19' en matériau thermoplastique solide mais déformable est d'abord inséré dans l'ouverture faciale 17' après la mise en place de l'identifiant 16' dans la cavité 15' puis soudé avec emboîtage mécanique ondulé 25' à la paroi latérale 23' de la cavité 15' par chauffage et compression. Ici aussi le bouchon (ou couvercle) 19' déborde légèrement de la face 13' et présente un volume suffisant pour assurer le remplissage de la cavité 15' avec débordement autour de la périphérie de l'identifiant électronique. Il est à noter qu'il peut être intéressant de chauffer le fond 24 de la cavité 15' par le plateau chauffant inférieur 22' pour assurer un bon appui entre l'identifiant électronique 16' et la paroi du fond 24'. Dans certains cas une goutte de colle peut être déposée entre le fond 24' et l'identifiant 16'.

L'invention n'est pas limitée aux moyens de chauffage et compression ou de thermocompression décrits dans le présent exposé mais concerne l'utilisation de moyens techniquement équivalents connus de l'homme de métier. En particulier, le terme « chauffage » est utilisé dans un sens large et comprend notamment le chauffage par résistances électriques, le chauffage à hautes fréquences, micro-ondes ou infrarouge. De même il est possible de séparer physiquement les moyens de chauffage des moyens de compression (presse à plateaux). Enfin le ou les bouchons (ou couvercles) peuvent être préchauffés avant leurs insertions dans les cavités. De plus les moyens de pressage peuvent s'étendre sur toute la face du jeton ou de la plaque pour les matériaux thermodurcissables (comme décrit ci-après) permettant ainsi d'obtenir un jeton ou une plaque présentant un bon état de surface et un aspect visuel de grande qualité.

Les figures 6, 7 et 8 concernent un mode de réalisation préférentiel de jeton ou plaque selon l'invention et selon lequel le corps du jeton ou de la plaque est constitué en matériau plastique thermodurcissable, dans le cas présent un jeton de jeu 30 représenté en perspective et dont le corps plat 32 présente deux faces sensiblement parallèles 33 et 34.

D'une façon générale la structure du jeton 30 et assez proche de celle de la plaque 10' et sa description ne sera pas reprise en détails notamment pour les éléments similaires.

Le jeton 30 intègre un identifiant électronique 36, identique à l'identifiant électronique 16 décrit ci-avant, disposé dans une cavité 35 prévue dans le corps 32, l'antenne de l'identifiant 36 étant disposée sensiblement parallèlement aux faces 33 et 34. Dans la pratique le corps 32 est réalisé à partir d'une préforme en matériau thermodurcissable comportant une cavité 35 non-traversante s'étendant dans le corps 32 perpendiculairement aux faces 33 et 34 visible sur la figure 7. La cavité 35 est obtenue soit directement à la réalisation de la préforme (prémoulage à froid), soit par enlèvement de matière. De façon optionnelle le fond 40 de la cavité présente un gradin central pour définir en logement 44 pour l'identifiant électronique 36.

Comme illustré sur la figure 7, la cavité 35 à fond à gradin central 40 formant logement 44 comporte une ouverture faciale 37. L'intégration de l'identifiant électronique 16 commence par la mise en place de celui-ci dans le logement 44 de la cavité 35 sensiblement à mi-hauteur suivi de l'insertion d'un bouchon (ou couvercle) 39 dans l'ouverture faciale 37 de la cavité 35. La préforme du corps de jeton est placée dans un moule chauffant 41, 42 dont seule la partie inférieure 42 est montrée sur la figure 7.

Le bouchon (ou couvercle) 39 est inséré dans la cavité 35 de préférence avec un jeu minimal dans un état solide mais déformable pendant la phase ultérieure de soudure et présente un volume suffisant pour assurer le remplissage complet de la cavité 35 et une bonne soudure avec la paroi latérale 43 de cette dernière lors de la fermeture de l'ouverture faciale 37.

Le bouchon (ou couvercle) 39 est réalisé en matière thermodurcissable, chargée ou non ; par exemple un polymère choisi parmi les polyesters insaturés chargés entre 50% et 70% en poids de baryte ou de sulfate de baryum.

L'intégration de l'identifiant électronique se termine par une opération de thermocompression avec action combinée de la chaleur et de la pression dans le moule 41, 42, avec une température comprise entre 120°C et 160°C et une pression appliquée comprise entre 0,2 et 1 MPa (entre 2 et 10 bars).

Comme illustré à la figure 8 le bouchon (ou couvercle) 39 sous l'action combinée de la chaleur et de la pression appliquée sur chaque zone chauffée se déforme pour se souder avec emboîtage mécanique ondulé 43 à la paroi latérale de la cavité 35 et fermer les ouvertures faciales 37, la limite de la zone de soudure disparaissant (au moins en surface) en cas de matériaux thermodurcissables identiques ou quasi identiques pour le bouchon (ou couvercle) 39 et le corps de jeton 32.

Bien évidemment la description de ce mode de réalisation de l'invention s'applique également aux plaques rectangulaires et aux jetons ou plaques plats à contours divers, notamment elliptiques ainsi qu'aux plaques et jetons à cavité traversante fermée par deux bouchons (ou couvercles).

Ainsi grâce à l'invention ici décrite il est possible d'obtenir des plaques et jetons de jeu à identifiant électronique de l'ordre de 3 mm d'épaisseur, de bonne qualité et à coût réduit.

## Revendications

1. Jeton à dispositif d'identification électronique, comportant un corps plat (32) en matière plastique à faces sensiblement parallèles et pourvu d'une cavité (35) recevant un dispositif d'identification électronique (36), ladite cavité (35) présentant au moins une ouverture faciale (37) fermée par un bouchon ou couvercle (39) en matière plastique inséré dans ladite cavité (35) dans un état solide déformable et solidarisé directement audit corps plat (32) par chauffage et pression combinés, **caractérisé en ce que** le corps (32) et le bouchon ou couvercle (39) sont réalisés en matières plastiques thermodurcissables, et **en ce que** ledit corps (32) est réalisé à partir d'une préforme.

2. Jeton selon la revendication 1, **caractérisé en ce que** la préforme dudit corps (32) est obtenue par prémoulage à froid.

3. Jeton selon l'une des revendications 1 et 2, **caractérisé en ce que** ledit bouchon ou couvercle (39) est inséré avec un jeu de préférence minimal dans une ouverture faciale (37) de la cavité de forme complémentaire (35) et directement solidarisé au corps du jeton (32) par soudure et emboîtage mécanique.

4. Jeton selon l'une des revendications 1 à 3, **caractérisé en ce que** ladite application des chauffage et pression combinés s'étend sur ledit bouchon ou couvercle (36) et les deux faces entières (33,34) dudit corps (32).

5. Jeton selon l'une des revendications précédentes, **caractérisé en ce que** ledit corps présente une cavité traversante fermée par deux bouchons ou couvercles disposés de part et d'autre du dispositif d'identification électronique.

6. Jeton selon l'une des revendications 1 à 4, **caractérisé en ce que** ledit corps (32) présente une cavité non-traversante (35) à fond plat ou à fond à gradin destiné à recevoir tout ou partie du dispositif d'identification électronique (36) et fermée par un bouchon ou un couvercle (39).

7. Jeton selon l'une des revendications précédentes, **caractérisé en ce que** le dispositif d'identification électronique (36) comporte un circuit électronique (25) comportant une mémoire portant des informations concernant le jeton, par exemple un code d'identification, et un émetteur-récepteur (26) à antenne périphérique (27) adapté pour être alimenté par couplage inductif.

8. Jeton selon l'une des revendications précédentes, **caractérisé en ce que** ledit dispositif d'identification électronique (36) avec son antenne (27) est disposé dans une enceinte de protection telle qu'une enveloppe (29) plane en film mince (28), une coque de protection en matière plastique rigide ou une pastille de résine d'enrobage durcie, notamment de type époxy.

9. Jeton selon les revendications 6 et 8 prises en combinaison, **caractérisé en ce que** ledit dispositif d'identification électronique (36) et ladite enceinte de protection se présentent sous la forme d'un disque plat de diamètre inférieur au diamètre de ladite cavité (35) pour pouvoir se loger au moins en partie dans le logement (44) formé par le fond à gradin de ladite cavité.

10. Jeton selon l'une des revendications 1 à 9, **caractérisé en ce que** le corps (32) et le bouchon ou couvercle (39) sont réalisés en matières plastiques thermodurcissables identiques ou non, chargées ou non, et appartenant à la famille des polyesters insaturés.

11. Jeton selon l'une des revendications précédentes étant un jeton ou une plaque de jeu.

12. Procédé de fabrication d'un jeton selon l'une des revendications précédentes, le procédé comportant les opérations suivantes:
- réalisation d'une préforme du corps (32) de jeton en matière plastique thermodurcissable,
- réalisation d'une cavité (35) dans ladite préforme du corps (32) présentant au moins une ouverture faciale (37),
- mise en place du dispositif d'identification électronique(36) dans ladite cavité (35) et insertion d'un bouchon ou couvercle (39) dans chaque ouverture faciale (37),
- mise en place dans un moule (41,42) de l'ensemble constitué de la préforme du corps (32) de jeton pourvue du dispositif d'identification électronique (36) et du ou des bouchons ou couvercles (37),
- réalisation du corps (32) du jeton ou de la plaque par thermocompression dudit ensemble et fermeture de la cavité (35) dans le corps (32) du jeton.

## Claims

1. Token with an electronic identification device, including a flat plastic body (32) having approximately parallel faces and provided with a cavity (35) accommodating an electronic identification device (36), the said cavity (35) having at least one facial opening (37) closed by a plastic plug or cover (39) inserted into said cavity (35) in a deformable solid state and fastened directly to said flat body (32) by combined heating and pressure, charaterized in that the said body (32) and the plug or cover (39) are made of thermosetting plastics and in that said body (32) is made from a preform.

2. Token as claimed in claim 1, **characterized in that** the preform of the said body (32) is produced by cold premolding.

3. Token as claimed in any one of claims 1 or 2, **characterized in that** said plug or cover (39) is inserted with a preferred minimum clearance into a facial opening (37) in the cavity of complementary shape (35) and is directly fastened to the body of the token (32) by bonding and mechanical interlocking.

4. Token as claimed in any one of the claims 1 to 3, **characterized in that** said application of the combined heating and pressure extends over said plug or cover (36) and the two entire faces (33, 34) of said body (32).

5. Token as claimed in any one of the preceding claims, **characterized in that** said body has a through-cavity closed by two plugs or covers placed on each side of the electronic identification device.

6. Token as claimed in any one of claims 1 to 4, **characterized in that** said body (32) has a non-through-cavity (35) which has a flat bottom or a stepped bottom intended to accommodate all or part of the electronic identification device (36) and is closed by a plug or a cover (39).

7. Token as claimed in any one of the preceding claims, **characterized in that** the electronic identification device (36) includes an electronic circuit (25) having a memory carrying information relating to the token, for example an identification code, and a transmitter-receiver (26) with a peripheral antenna (27) designed to be supplied by inductive coupling.

8. Token as claimed in any one of the preceding claims, wherein said electronic identification device (36) with its antenna (27) is placed in a protective enclosure (29) such as a flat casing made of a thin film (28), a rigid plastic protective shell or an encapsulating insert of cured resin, especially of the epoxy type.

9. Token as claimed in claims 6 and 8 taken in combination, **characterized in that** said electronic identification device (36) and said protective enclosure are in the form of a flat disk having a smaller diameter than the diameter of said cavity (35) in order to be able to be at least partly housed in the housing (44) formed by the stepped bottom of said cavity.

10. Token as claimed in any one of the preceding claims, **characterized in that** the body (32) and the plug or cover (39) are made of filled or unfilled thermosetting plastics, which may or may not be identical, and belonging to the family of unsaturated polyesters.

11. Token as claimed in any one of the preceding claims being a gaming token or tile.

12. Process for manufacturing a token as claimed in any one of the preceding claims, including the following operations:
- production of a preform of the token body (32) made of a thermosetting plastic;
- production of a cavity (35) in said preform of the body (32) having at least one facial opening (37);
- placing of the electronic identification device (36) in said cavity (35) and insertion of a plug or cover (39) made of a thermosetting plastic into each facial opening (37);
- placing the whole assembly, consisting of the preform of the token body (32) provided with the electronic identification device (36) and with the plug(s) or cover(s) (37), in a mold (41, 42);
- production of the body (32) of the token by thermocompression bonding of said whole assembly and closure of the cavity (35) in the body (32) of the token.

## Patentansprüche

1. Jeton mit elektronischer Identifikationsvorrichtung, welche aufweist:
einen ebenen Körper (32) aus Kunststoff mit im wesentlichen parallelen Stirnflächen und versehen mit einem Hohlraum (35), der eine elektronische Identifikationsvorrichtung (36) aufnimmt, wobei der Hohlraum (35) mindestens eine stimseitige Öffnung (37) aufweist, die von einem Stopfen oder Deckel (39) aus Kunststoff verschlossen ist, welcher in den Hohlraum (35) in verformbarem festen Zustand eingesetzt und unmittelbar mit dem ebenen Körper (32) durch Erwärmung und Druck in Kombination fest verbunden ist, **dadurch gekennzeichnet, dass** der Körper (32) und der Stopfen oder Deckel (39) aus wärmehärtbaren Kunststoffen bestehen und dass der Körper (32) ausgehend von einem Vorformling hergestellt ist.

2. Jeton nach Anspruch 1, **dadurch gekennzeichnet, dass** der Vorformling des Körpers (32) durch Rohformgebung im Kaltzustand erhalten wird.

3. Jeton nach einem der Ansprüche 1 und 2, **dadurch gekennzeichnet, dass** der Stopfen oder Deckel (39) mit vorzugsweise minimalem Spiel in eine stirnseitige Öffnung (37) des Hohlraumes komplementärer Form (35) eingesetzt und mit dem Körper des Jetons (32) durch Schweißen oder mechanisches Fügen unmittelbar fest verbunden ist.

4. Jeton nach einem der Ansprüche 1 bis 3, **dadurch gekennzeichnet, dass** die Anwendung der Erwärmung und des Drucks in Kombination sich über den Stopfen oder Deckel (36) und die beiden gesamten Stirnflächen (33, 34) des Körpers (32) erstreckt.

5. Jeton nach einem der vorhergehenden Ansprüche, **dadurch gekennzeichnet, dass** der Körper einen durchgehenden Hohlraum aufweist, der von zwei Stopfen oder Deckeln verschlossen wird, die beidseitig zu der elektronischen Identifikationsvorrichtung angeordnet sind.

6. Jeton nach einem der Ansprüche 1 bis 4, **dadurch gekennzeichnet, dass** der Körper (32) einen nicht durchgehenden Hohlraum (35) mit ebenem Boden oder abgestuftem Boden aufweist, der zur Aufnahme der gesamten elektronischen Identifikationsvorrichtung (36) oder eines Teils desselben bestimmt und von einem Stopfen oder einem Deckel (39) verschlossen ist.

7. Jeton nach einem der vorhergehenden Ansprüche, **dadurch gekennzeichnet, dass** die elektronische Identifikationsvorrichtung (36) eine elektronische Schaltung (25) aufweist, welche einen Speicher, der den Jeton betreffende Informationen, beispielsweise einen Identifikationscode, trägt, sowie einen Sender-Empfänger (26) mit peripherer Antenne (27), die durch induktive Kopplung speisbar ist, aufweist.

8. Jeton nach einem der vorhergehenden Ansprüche, **dadurch gekennzeichnet, dass** die elektronische Identifikationsvorrichtung (36) mit ihrer Antenne (27) in einer Schutzumhüllung wie einer ebenen Hülle (29) aus dünnem Film (28), einer Schutzschale aus steifem Kunststoff oder einer Pille aus einschließendem gehärtetem Harz, insbesondere vom Typ Expoxidharz, angeordnet ist.

9. Jeton nach den Ansprüchen 6 und 8 in Kombination, **dadurch gekennzeichnet, dass** die elektronische Identifikationsvorrichtung (36) und die Schutzumhüllung die Form einer ebenen Scheibe haben, deren Durchmesser kleiner als der Durchmesser des Hohlraumes (35) ist, um mindestens teilweise in der durch den abgestuften Boden des Hohlraumes gebildeten Aufnahme (44) aufgenommen werden zu können.

10. Jeton nach einem der Ansprüche 1 bis 9, **dadurch gekennzeichnet, dass** der Körper (32) und der Stopfen oder Deckel (39) aus wärmehärtbaren Kunststoffen hergestellt sind, die identisch oder nicht identisch sind, gefüllt oder nicht gefüllt sind und zur Familie der ungesättigten Polyester gehören.

11. Jeton nach einem der vorhergehenden Ansprüche, welcher ein Spieljeton oder eine Spielmarke ist.

12. Verfahren zum Herstellen eines Jetons nach einem der vorhergehenden Ansprüche, welches Verfahren die folgenden Schritte aufweist:
- Herstellen eines Vorformlings des Jetonkörpers (32) aus einem wärmehärtbaren Kunststoff,
- Herstellen eines Hohlraumes (35) in dem Vorformling des Körpers (32), welcher mindestens eine stirnseitige Öffnung (37) aufweist,
- Anordnen der elektronischen Identifikationsvorrichtung (36) in dem Hohlraum (35) und Einsetzen eines Stopfens oder Deckels (39) in jede stimseitige Öffnung (37),
- Anordnen des Gebildes, das von dem mit der elektronischen Identifikationsvorrichtung (36) versehenen Vorformling des Jetonkörpers (32) und dem oder den Stopfen oder Deckeln (37) gebildet wird, in eine Form (41, 42),
- Herstellen des Körpers (32) des Jetons oder der Marke durch Thermokompression des Gebildes und Verschließen des Hohlraumes (35) in dem Körper (32) des Jetons.
